# EUROPEAN PATENT SPECIFICATION

(11) **EP 4 556 273 B1**
(45) Date of publication and mention of the grant of the patent: **24.12.2025**
(21) Application number: 24210763.9
(22) Date of filing: 05.11.2024
(51) Int. Cl.: B60K 1/00

(54) **HYBRID ELECTRIC VEHICLE**
HYBRIDELEKTROFAHRZEUG
VÉHICULE ÉLECTRIQUE HYBRIDE

(30) Priority: 20.11.2023 JP 2023196990
(43) Date of publication of application: 21.05.2025
(73) Proprietor: TOYOTA JIDOSHA KABUSHIKI KAISHA, Aichi-ken, 471-8571 (JP)
(72) Inventor: KUNIFUDA, Hiroki, Toyota-shi, 471-8571 (JP); HAMATANI, Takashi, Toyota-shi, 471-8571 (JP); HISHINUMA, Shoji, Toyota-shi, 471-8571 (JP); SUENAGA, Shinichiro, Toyota-shi, 471-8571 (JP)
(74) Representative: TBK

(56) References cited:
- EP-A1- 4 086 563
- US-A1- 2013 118 820
- US-A1- 2020 259 231

## Description

### BACKGROUND OF THE INVENTION

### 1. Field of the Invention

The present invention relates to hybrid electric vehicles with a mechatronic unit.

### 2. Description of Related Art

A hybrid electric vehicle is well known that includes: an electric motor; a power transmission device to which the electric motor is connected so that power is transmittable; a driving battery; and a power control unit that controls electric power transferred between the battery and the electric motor, and that includes a mechatronic unit that is an integrated unit combining the power control unit and a drive device including the electric motor and the power transmission device. An example of such a hybrid electric vehicle is disclosed in Japanese Unexamined Patent Application Publication No. 2020-82863 (JP 2020-82863 A). JP 2020-82863 A discloses a layout structure in which the mechatronic unit in which the power control unit is disposed vertically above the drive device is mounted in a front space (front compartment) of the vehicle together with a radiator etc. Further examples of hybrid electric vehicles are disclosed in US 2013/118820, EP 4 086 563 and US 2020/259231.

### SUMMARY OF THE INVENTION

A hybrid electric vehicle including an engine in a front compartment is equipped with an air conditioner. The air conditioner includes, for example, an electric compressor, an exterior heat exchanger, an interior heat exchanger, and an expansion valve. When the exterior heat exchanger, for example, a condenser, is of an air-cooled type, the exterior heat exchanger is disposed at the front inside the front compartment. In this case, the condenser and a pipe connected to the condenser may be damaged in the event of, for example, a frontal collision, causing leakage of a refrigerant. Additionally, it is difficult to secure sufficient space for placing components such as the air conditioner within the front compartment where the engine is disposed.

The present invention provides a hybrid electric vehicle that can prevent or reduce damage to an air conditioner in the event of a frontal collision.

The present invention relates to a hybrid electric vehicle that includes a drive device, a driving battery, a mechatronic unit, and an air conditioner. The drive device includes an electric motor and a power transmission device to which the electric motor is connected in such a manner that power is transmittable. The mechatronic unit is an integrated unit combining the drive device and a power control unit configured to control electric power transferred between the battery and the electric motor. The air conditioner includes an electric compressor and an exterior heat exchanger. The exterior heat exchanger is of a water-cooled type, and is located vertically above the mechatronic unit when mounted in the hybrid electric vehicle. In the hybrid electric vehicle of the above aspect, the air conditioner may include a refrigerant circuit through which a refrigerant is circulated.

According to the hybrid electric vehicle of the above aspect, the exterior heat exchanger of the air conditioner is of a water-cooled type, and when mounted in the hybrid electric vehicle, is located vertically above the mechatronic unit that is an integrated unit combining the power control unit and the drive device including the electric motor and the power transmission device. This improves flexibility in position of the water-cooled exterior heat exchanger compared to an air-cooled exterior heat exchanger. The water-cooled exterior heat exchanger disposed vertically above the mechatronic unit is less susceptible to damage in a frontal collision compared to an air-cooled exterior heat exchanger that is disposed at the front inside a front compartment. Therefore, damage to the air conditioner can be prevented or reduced in the event of a frontal collision. When the air conditioner includes the refrigerant circuit, leakage of the refrigerant circulating in the refrigerant circuit can be avoided.

In the hybrid electric vehicle according to the aspect of the present invention, the electric compressor may be located vertically above the mechatronic unit when mounted in the hybrid electric vehicle.

In the hybrid electric vehicle having the above configuration, the electric compressor of the air conditioner is located vertically above the mechatronic unit when mounted in the hybrid electric vehicle. This makes the electric compressor less susceptible to damage in a frontal collision than when the electric compressor is disposed at the front inside the front compartment. Therefore, damage to the air conditioner can be prevented or reduced in the event of a frontal collision.

In the hybrid electric vehicle of the aspect of the present invention, the power control unit may be located vertically above the drive device when mounted in the hybrid electric vehicle. The exterior heat exchanger may be located vertically above the power control unit when mounted in the hybrid electric vehicle.

According to the hybrid electric vehicle of the above aspect, the power control unit is located vertically above the drive device and the exterior heat exchanger is located vertically above the power control unit, when mounted in the hybrid electric vehicle. The exterior heat exchanger is thus disposed in the space created vertically above the mechatronic unit as a result of reduction in size due to integration. This makes the exterior heat exchanger less susceptible to damage in the event of a frontal collision.

In the hybrid electric vehicle configured having the above configuration, the electric compressor may be connected to the battery in a branch portion where an electrical path from the battery to the power control unit is branched. The branch portion may be provided in the power control unit. The electric compressor may be located vertically above the power control unit when mounted in the hybrid electric vehicle.

According to the hybrid electric vehicle having the above configuration, the electric compressor is connected to the battery in the branch portion provided in the power control unit, and is located vertically above the power control unit when mounted in the hybrid electric vehicle. The electric compressor is thus disposed in the space created vertically above the mechatronic unit as a result of reduction in size due to integration. This makes the electric compressor less susceptible to damage in the event of a frontal collision. Moreover, the length of a wire connecting the electric compressor and the branch portion is reduced, so that cost can be reduced.

In the hybrid electric vehicle of the aspect of the present invention, a part of the power control unit may be a first electrical device. Another part of the power control unit may be a second electrical device. The first electrical device and the second electrical device may be separately disposed on an outer periphery of the drive device. One electrical device out of the first electrical device and the second electrical device may be located vertically above the drive device when mounted in the hybrid electric vehicle. The exterior heat exchanger may be located vertically above the one electrical device when mounted in the hybrid electric vehicle.

According to the hybrid electric vehicle having the above configuration, the first electrical device that is a part of the power control unit and the second electrical device that is another part of the power control unit are separately disposed on the outer periphery of the drive device. The one electrical device out of the first electrical device and the second electrical device is located vertically above the drive device and the exterior heat exchanger is located vertically above the one electrical device, when mounted in the hybrid electric vehicle. The exterior heat exchanger is thus disposed in the space created vertically above the mechatronic unit as a result of both the reduction in size due to integration and the separate arrangement of the power control unit. This makes the exterior heat exchanger less susceptible to damage in the event of a frontal collision.

In the hybrid electric vehicle having the above configuration, the electric compressor may be connected to the battery in a branch portion where an electrical path from the battery to the one electrical device is branched, the branch portion may be provided in the one electrical device. The electric compressor may be located vertically above the one electrical device when mounted in the hybrid electric vehicle.

According to the hybrid vehicle having the above configuration, the electric compressor is connected to the battery in the branch portion provided in the one electrical device, and is disposed vertically above the one electrical device when mounted in the hybrid electric vehicle. The electric compressor is thus disposed in the space created vertically above the mechatronic unit as a result of both the reduction in size due to integration and the separate arrangement of the power control unit. This makes the electric compressor less susceptible to damage in the event of a frontal collision. Moreover, the length of a wire connecting the electric compressor and the branch portion is reduced, so that cost can be reduced.

In the hybrid electric vehicle of the aspect of the present invention, the exterior heat exchanger may be cooled by a coolant that cools the power control unit.

According to the hybrid electric vehicle having the above configuration, the exterior heat exchanger is cooled by the coolant that cools the power control unit. The exterior heat exchanger is thus appropriately cooled without the need for a dedicated water-cooling device for cooling the exterior heat exchanger.

In the hybrid electric vehicle of the aspect of the present invention, the air conditioner may include a refrigerant circuit that uses a flammable gas as a refrigerant circulated through the electric compressor and the exterior heat exchanger.

According to the hybrid electric vehicle having the above configuration, the air conditioner includes the refrigerant circuit that uses a flammable gas as a refrigerant circulated through the electric compressor and the exterior heat exchanger. Regarding the aforementioned issue of damage to the air conditioner in the event of a frontal collision, the exterior heat exchanger is disposed vertically above the mechatronic unit. This makes the air conditioner less susceptible to damage in the event of a frontal collision. Therefore, leakage of the flammable gas can be prevented or reduced.

In the hybrid electric vehicle having the above configuration, the air conditioner may include an electric pump and an interior heat exchanger. The air conditioner may further include a second refrigerant circuit using a nonflammable refrigerant as a refrigerant, and a refrigerant heat exchanger that exchanges heat between the flammable gas and the nonflammable refrigerant. The refrigerant heat exchanger may be located vertically above the mechatronic unit when mounted in the hybrid electric vehicle.

According to the hybrid electric vehicle having the above configuration, the air conditioner further includes: the second refrigerant circuit using a nonflammable refrigerant as a refrigerant circulated through the electric pump and the interior heat exchanger; and the refrigerant heat exchanger that exchanges heat between the flammable gas and the nonflammable refrigerant. The refrigerant heat exchanger is located vertically above the mechatronic unit when mounted in the hybrid electric vehicle. This makes the air conditioner less susceptible to damage in a frontal collision. Therefore, leakage of the flammable gas can be prevented or reduced. Moreover, even if the air conditioner is damaged, leakage of the flammable gas into a vehicle cabin can be avoided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates an example of a schematic configuration of an electrified vehicle according to a first embodiment to which the present invention is applied;
FIG. 2 illustrates an example of an electrical configuration related to control of first and second electric motors of the electrified vehicle shown in FIG. 1;
FIG. 3 illustrates an example of a schematic configuration of a mechatronic unit of the electrified vehicle;
FIG. 4 illustrates an example of the arrangement of the mechatronic unit;
FIG. 5 illustrates an example of a thermal control circuit diagram in the electrified vehicle;
FIG. 6 illustrates an example of the electrified vehicle with the mechatronic unit and a refrigerant circuit mounted therein.
FIG. 7 illustrates an example of a thermal control circuit diagram in an electrified vehicle of a second embodiment to which the present invention is applied, which is an example different from the thermal control circuit diagram in the electrified vehicle of the first embodiment shown in FIG. 5;
FIG. 8 illustrates an example of the electrified vehicle of the second embodiment having a mechatronic unit and a refrigerant circuit of FIG. 7 mounted therein, which is an example different from the electric vehicle shown in FIG. 6;
FIG. 9 shows an example of a schematic configuration of a mechatronic unit of an electrified vehicle of a third embodiment to which the present invention is applied, which is an example different from the mechatronic unit of FIG. 3;
FIG. 10 illustrates an example of a schematic configuration of an electrified vehicle according to a fourth embodiment to which the present invention is applied, which is an example different from the electrified vehicle of the first embodiment shown in FIG. 1;
FIG. 11 illustrates an example of the arrangement of a mechatronic unit in the electrified vehicle of the fourth embodiment shown in FIG. 10; and
FIG. 12 illustrates an example of a mechatronic unit of an electrified vehicle of a fifth embodiment to which the present invention is applied, which is an example different from the mechatronic unit in FIG. 4.

### DETAILED DESCRIPTION OF EMBODIMENTS

In an embodiment of the present invention, the mechatronic unit is, in a broad sense, a unit formed by integrating a case housing the power control unit into a case housing the drive device including the electric motor and the power transmission device, namely a unit in which the drive device and power control unit are disposed close to each other. For example, the mechatronic unit may have a configuration in which the case of the power control unit and the case of the drive device are fixed together with bolts or brackets, or a configuration in which the power control unit is housed in the case of the drive device. Specifically, the mechatronic unit may have a configuration in which the case housing the power control unit and the case housing the drive device are separate members and these cases are fastened together with brackets or bolts. Alternatively, the mechatronic unit may have a configuration in which the power control unit is also housed in a case housing the electric motor, or the power control unit is also housed in a case housing the electric motor and the power transmission device.

Hereinafter, embodiments of the present invention will be described in detail with reference to the drawings.

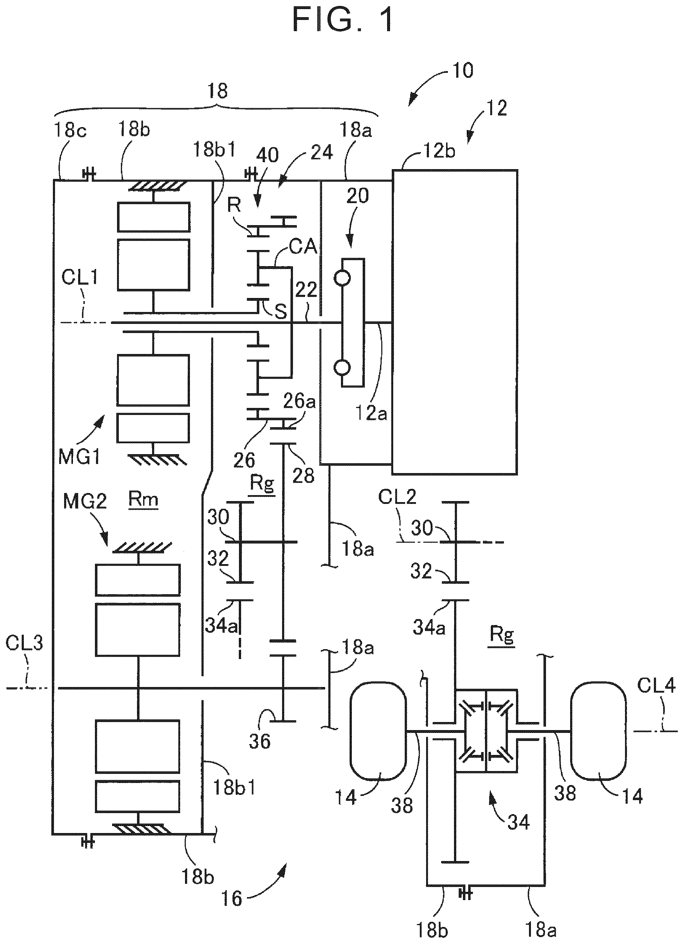

FIG. 1 illustrates an example of a schematic configuration of an electrified vehicle 10 of a first embodiment to which the present invention is applied. In FIG. 1, the electrified vehicle 10 is a hybrid electric vehicle including an engine 12, a first electric motor MG1, and a second electric motor MG2. The electrified vehicle 10 also includes drive wheels 14 and a power transmission device 16.

The engine 12 is a known internal combustion engine. The power transmission device 16 is provided on a power transmission path between the engine 12 and the drive wheels 14 and on a power transmission path between the second electric motor MG2 and the drive wheels 14. The engine 12 and the second electric motor MG2 each function as a power source. The second electric motor MG2 is an electric motor connected to the power transmission device 16 in such a manner that power is transmittable.

Each of the first electric motor MG1 and the second electric motor MG2 is a known rotating electrical machine having a function as a motor that generates mechanical power from electric power and a function as a generator that generates electric power from mechanical power. The first electric motor MG1 and the second electric motor MG2 are so-called motor generators. The first electric motor MG1 and the second electric motor MG2 are provided in a non-rotatable case 18 that is a non-rotating member attached to a vehicle body.

The power transmission device 16 includes, inside the case 18, a damper 20, an input shaft 22, a transmission unit 24, a compound gear 26, a driven gear 28, a driven shaft 30, a final gear 32, a differential gear 34, and a reduction gear 36. The power transmission device 16 also includes a pair of drive shafts 38 connected to the differential gear 34.

The damper 20 is connected to a crankshaft 12a of the engine 12. The input shaft 22 functions as an input rotating member of the transmission unit 24. The input shaft 22 is connected to the damper 20 and is connected to the crankshaft 12a via the damper 20 etc. The transmission unit 24 is connected to the input shaft 22. The compound gear 26 is a rotating element on the output side of the transmission unit 24. The compound gear 26 has a drive gear 26a formed on part of its outer circumferential surface. The drive gear 26a is an output rotating member of the transmission unit 24. The driven gear 28 meshes with the drive gear 26a. The driven gear 28 and the final gear 32 are fixed to the driven shaft 30 so that the driven gear 28 and the final gear 32 are not rotatable relative to each other. The final gear 32 has a smaller diameter than the driven gear 28, and meshes with a differential ring gear 34a of the differential gear 34. The reduction gear 36 has a smaller diameter than the driven gear 28, and meshes with the driven gear 28. A rotor shaft of the second electric motor MG2 is connected to the reduction gear 36. The second electric motor MG2 is thus connected to the reduction gear 36 in such a manner that power is transmittable.

The power transmission device 16 configured in this manner is suitably used in front engine, front drive (FF) or rear engine, rear drive (RR) vehicles. The power transmission device 16 transmits power output from the engine 12 to the driven gear 28 via the transmission unit 24. The power transmission device 16 also transmits power output from the second electric motor MG2 to the driven gear 28 via the reduction gear 36. The power transmission device 16 transmits the power transmitted to the driven gear 28 to the drive wheels 14 via the driven shaft 30, the final gear 32, the differential gear 34, the drive shafts 38, etc. in this order. The driven gear 28, the driven shaft 30, and the final gear 32 form a transmission mechanism that transmits power from the second electric motor MG2 to the differential gear 34 and that also transmits power from the drive gear 26a to the differential gear 34. The differential gear 34 distributes power from the engine 12 and the second electric motor MG2 to the drive wheels 14. The drive shafts 38 transmit the power from the differential gear 34 to the drive wheels 14. The second electric motor MG2 is connected to the drive wheels 14 in such a manner that power is transmittable.

The transmission unit 24 includes the first electric motor MG1 and a differential mechanism 40. The differential mechanism 40 is a known single-pinion planetary gear device including a sun gear S, a carrier CA, and a ring gear R. The sun gear S is connected to a rotor shaft of the first electric motor MG1. The first electric motor MG1 is thus connected to the sun gear S in such a manner that power is transmittable. The carrier CA is connected to the input shaft 22. The engine 12 is connected to the carrier CA via the input shaft 22 etc. in such a manner that power is transmittable. The ring gear R is formed on part of the inner peripheral surface of the compound gear 26 and is integrally connected to the drive gear 26a.

The differential mechanism 40 functions as a differential mechanism that has a differential effect and to which the engine 12 is connected in such a manner that power is transmittable. The first electric motor MG1 is an electric motor connected to the differential mechanism 40 in such a manner that power is transmittable. The differential mechanism 40 is a power split mechanism that mechanically splits the power of the engine 12 input to the carrier CA between the first electric motor MG1 and the drive gear 26a. The transmission unit 24 is a known electrical transmission mechanism in which the differential state of the differential mechanism 40 is controlled by controlling the operating state of the first electric motor MG1.

The power transmission device 16 has a first axis CL1, a second axis CL2, a third axis CL3, and a fourth axis CL4. These four axes CL1, CL2, CL3, and CL4 are parallel to each other. The first axis CL1 is the axis of the input shaft 22 and the rotor shaft of the first electric motor MG1, and is also the rotation axis of the transmission unit 24 and the first electric motor MG1. The second axis CL2 is the axis of the driven shaft 30, and is also the rotation axis of the driven gear 28 and the final gear 32. The third axis CL3 is the axis of the rotor shaft of the second electric motor MG2, and is also the rotation axis of the reduction gear 36 and the second electric motor MG2. The fourth axis CL4 is the axis of the drive shaft 38, and is also the rotation axis of the differential gear 34.

The case 18 includes a housing 18a, a case body 18b, and a cover 18c. An engine block 12b of the engine 12 is connected to an opening portion of the housing 18a that is located on the engine 12 side. The housing 18a and the case body 18b are connected together by fasteners such as bolts so that an opening portion of the housing 18a that is located on the opposite side from the engine 12 and an opening portion of the case body 18b that is located on the engine 12 side are mated together. The case body 18b and the cover 18c are connected together by fasteners so that an opening portion of the case body 18b that is located on the opposite side from the engine 12 is closed by the cover 18c.

The case body 18b is a case including a partition wall 18b1. The partition wall 18b1 separates a gear chamber Rg that houses the driven gear 28, the differential gear 34, the differential mechanism 40, etc., from a motor chamber Rm that houses the first electric motor MG1 and the second electric motor MG2. The case body 18b and the housing 18a form the gear chamber Rg. The case body 18b forms the motor chamber Rm between the partition wall 18b1 and the cover 18c.

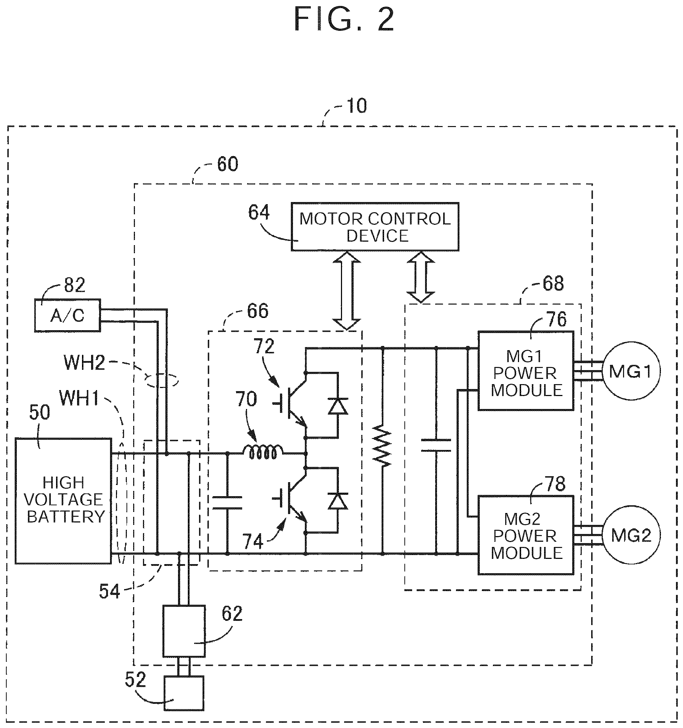

FIG. 2 illustrates an example of an electrical configuration related to control of the first electric motor MG1 and the second electric motor MG2 etc. In FIG. 2, the electrified vehicle 10 further includes a high voltage battery 50, an auxiliary battery 52, and a power control unit 60.

The high voltage battery 50 is a chargeable and dischargeable direct current power supply, and is, for example, a secondary battery such as a nickel metal hydride secondary battery or a lithium-ion battery. The high voltage battery 50 is connected to the power control unit 60. The high voltage battery 50 supplies stored electric power to, for example, the second electric motor MG2 via the power control unit 60. Electric power generated by power generation control of the first electric motor MG1 and electric power generated by regenerative control of the second electric motor MG2 are supplied to the high voltage battery 50 via the power control unit 60. The high voltage battery 50 is a driving battery.

The power control unit 60 includes a direct current-to-direct current (DC-DC) converter 62, a motor control device 64, a boost converter 66, and an inverter 68. The power control unit 60 is a power control device that controls electric power transferred between the high voltage battery 50 and the first and second electric motors MG1, MG2.

The DC-DC converter 62 is connected to the high voltage battery 50. The DC-DC converter 62 functions as a charging device that steps down the voltage of the high voltage battery 50 to the same voltage as that of the auxiliary battery 52 and charges the auxiliary battery 52. The auxiliary battery 52 is a low voltage battery that supplies electric power to operate auxiliary devices of the electrified vehicle 10, the motor control device 64, etc.

The boost converter 66 includes a reactor 70 and two switching devices 72, 74. The boost converter 66 is a buck-boost circuit having a function to boost the voltage of the high voltage battery 50 and supplying it to the inverter 68 and a function to step down the voltage converted to a direct current voltage by the inverter 68 and supplying it to the high voltage battery 50. As described above, the boost converter 66 boosts the direct current power from the high voltage battery 50 and supplies it to the inverter 68.

The inverter 68 includes an MG1 power module 76 and an MG2 power module 78. Each of the MG1 power module 76 and the MG2 power module 78 includes the same switching devices as the switching devices 72, 74. The inverter 68 converts the direct current from the boost converter 66 into an alternating current for driving the first electric motor MG1 and the second electric motor MG2. As described above, the inverter 68 converts the direct current power from the high voltage battery 50 that has been boosted by the boost converter 66 into alternating current power, and supplies it to the first electric motor MG1 and the second electric motor MG2. The inverter 68 converts the alternating current generated by the first electric motor MG1 using the power of the engine 12 and the alternating current generated by the second electric motor MG2 using regenerative braking into a direct current. The inverter 68 supplies the alternating current generated by the first electric motor MG1 as power for driving the second electric motor MG2, depending on the traveling state.

The motor control device 64 controls the boost converter 66 and the inverter 68 to control the first electric motor MG1 and the second electric motor MG2. For example, the motor control device 64 converts the direct current from the high voltage battery 50 into an alternating current to be used by each of the first electric motor MG1 and the second electric motor MG2. The motor control device 64 drives the first electric motor MG1 to secure a sufficient amount of power generation required to supply electric power to the second electric motor MG2 and charge the high voltage battery 50. The motor control device 64 drives the second electric motor MG2 based on an output request value according to the torque requested by the driver. The motor control device 64 causes the second electric motor MG2 to function as a generator according to the requested amount of regenerative braking.

The electrified vehicle 10 further includes an electric compressor 82 (see "A/C" in the figure). The electric compressor 82 is connected to the high voltage battery 50. The electric compressor 82 is a compressor used in an air conditioner 80, which will be described later, mounted in the electrified vehicle 10.

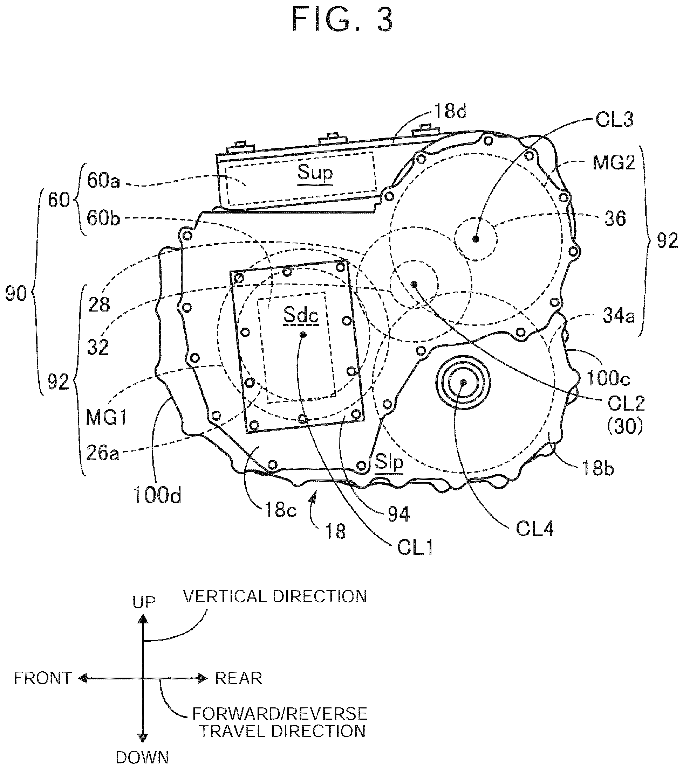

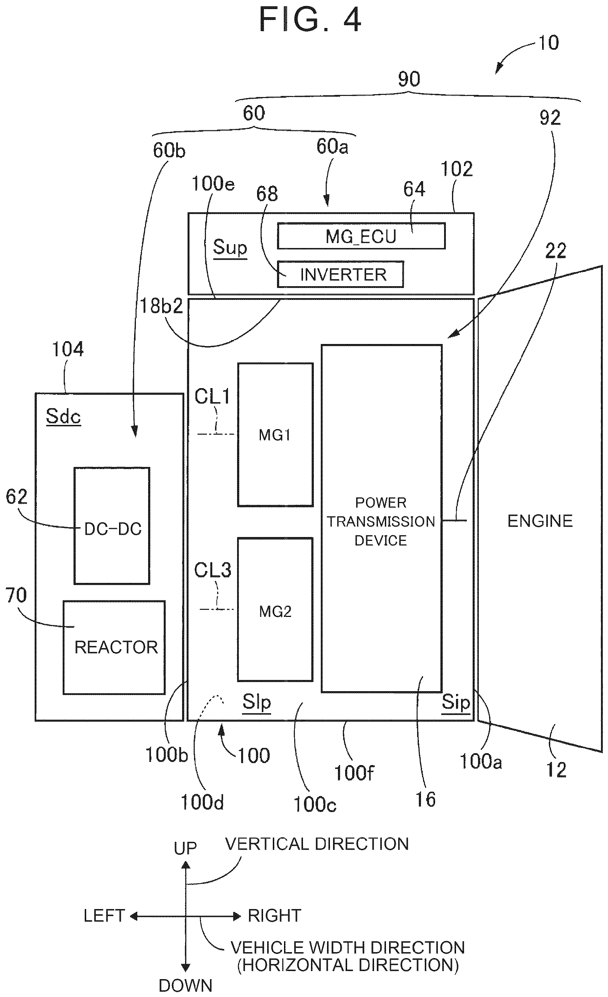

FIG. 3 illustrates an example of a schematic configuration of a mechatronic unit 90. FIG. 3 is a side view as viewed from the left side of the electrified vehicle 10. FIG. 4 illustrates an example of the arrangement of the mechatronic unit 90 in individual cases. FIG. 4 is a view as viewed from the rear of the electrified vehicle 10. The vertical direction, forward/reverse travel direction, and vehicle width direction (horizontal direction) in the figures indicate the directions when mounted in the electrified vehicle 10. The vehicle width direction is the axial directions of the first axis CL1, second axis CL2, third axis CL3, and fourth axis CL4. The right and left in the vehicle width direction are the right and left when facing the forward travel direction of the electrified vehicle 10.

In FIGS. 3 and 4, the mechatronic unit 90 is an integrated unit combining a drive device 92 and the power control unit 60. The drive device 92 is a transaxle including the power transmission device 16 (26a, 28, 32, 34a, 36, etc.), the first electric motor MG1, and the second electric motor MG2. The power control unit 60 is divided into a first electrical device 60a and a second electrical device 60b, and the first electrical device 60a and the second electrical device 60b are separately disposed. The first electrical device 60a includes, for example, the motor control device 64 (see "MG_ECU" in FIG. 4) and the inverter 68. The second electrical device 60b includes, for example, the DC-DC converter 62 and the reactor 70.

In FIG. 3, the case 18 further includes a protective plate 18d in addition to the housing 18a, case body 18b, and cover 18c described above. The case body 18b includes a bottom wall and side walls. The side walls extend vertically upward from the outer peripheral edge of the bottom wall on the front and rear sides in the forward/reverse travel direction. The case body 18b is open on top in the vertical direction. The protective plate 18d is a member in the shape of a plate, and closes the vertically upper opening of the case body 18b. The case body 18b further includes a partition wall 18b2 (see FIG. 4) that divides the internal space of the case body 18b into two spaces: a lower space Slp that is a space in the vertically lower portion, and an upper space Sup that is a space in the vertically upper portion.

The electrified vehicle 10 includes a DC-DC plate 94 to which the second electrical device 60b is fixed. The DC-DC plate 94 is attached to an opening portion of the cover 18c that is located on the opposite side from the case body 18b. A DC-DC space Sdc (see FIG. 4) is thus formed in the cover 18c.

When mounted in the electrified vehicle 10, the drive device 92 is housed in the lower space Slp of the case body 18b and an internal space Sip (see FIG. 4) of the housing 18a. When mounted in the electrified vehicle 10, the first electrical device 60a is housed in the upper space Sup in the case body 18b. When mounted in the electrified vehicle 10, the second electrical device 60b is housed in the DC-DC space Sdc of the cover 18c.

Referring to FIG. 3, when the drive device 92 is mounted in the electrified vehicle 10, the first axis CL1, the second axis CL2, the third axis CL3, and the fourth axis CL4 are parallel to a horizontal direction perpendicular to the forward/reverse travel direction of the electrified vehicle 10. When the drive device 92 is mounted in the electrified vehicle 10, the positions of the axes are located in order of the second electric motor MG2, the driven shaft 30, the first electric motor MG1, and the differential gear 34 from top to bottom in the vertical direction, and in order of the first electric motor MG1, the driven shaft 30, the differential gear 34, and the second electric motor MG2 from front to rear in the forward/reverse travel direction. This reduces the vertical size of the drive device 92 while providing an appropriate axial distance between the axes. As a result, the upper space Sup is created vertically above the drive device 92.

The first electrical device 60a that is a part of the power control unit 60 is mounted in the space created as a result of reduction in vertical size of the drive device 92. The second electrical device 60b that is another part of the power control unit 60 is mounted in the DC-DC space Sdc provided in the horizontal direction with respect to the drive device 92. Since the power control unit 60 is divided into the first electrical device 60a and the second electrical device 60b, and the first electrical device 60a and the second electrical device 60b are separately mounted, the vertical size of the mechatronic unit 90 is reduced.

In FIG. 4, the electrified vehicle 10 includes a drive case 100, a first electrical case 102, and a second electrical case 104. In FIG. 4, the drive case 100 is a case having a space for housing the drive device 92, that is, the lower space Slp of the case body 18b and the internal space Sip of the housing 18a. The first electrical case 102 is a case having a space for housing the first electrical device 60a, that is, the upper space Sup of the case body 18b. The second electrical case 104 is a case having a space for housing the second electrical device 60b, that is, the DC-DC space Sdc of the cover 18c. The mechatronic unit 90 is a unit combining the drive case 100, the first electrical case 102, and the second electrical case 104. The case 18 can be regarded as a case combining the drive case 100, the first electrical case 102, and the second electrical case 104.

The drive case 100 has a first wall surface 100a, a second wall surface 100b, a third wall surface 100c, a fourth wall surface 100d (see FIG. 3), a fifth wall surface 100e, and a sixth wall surface 100f, and these surfaces define the space for housing the drive device 92. The first wall surface 100a is a wall surface located on the right side in the vehicle width direction, and is a wall surface on the side where the engine 12 and the input shaft 22 are connected, that is, a wall surface of the housing 18a to which the engine 12 is connected. The second wall surface 100b is a wall surface on the left side in the vehicle width direction, is a wall surface to which the cover 18c of the case body 18b is connected, and is a wall surface opposite to the first wall surface 100a. The third wall surface 100c is a wall surface on the rear side in the forward/reverse travel direction. The fourth wall surface 100d is a wall surface on the front side in the forward/reverse travel direction (see FIG. 3) and is a wall surface opposite to the third wall surface 100c. The fifth wall surface 100e is a wall surface on the upper side in the vertical direction, and is a wall surface corresponding to the partition wall 18b2. The sixth wall surface 100f is a wall surface on the lower side in the vertical direction, is a wall surface corresponding to the bottom wall of the case body 18b or housing 18a, and is a wall surface opposite to the fifth wall surface 100e.

The engine 12 is disposed on the first wall surface 100a. When mounted in the electrified vehicle 10, the engine 12 is located adjacent to the drive case 100, i.e., the drive device 92, in the horizontal direction.

The first electrical case 102 and the second electrical case 104 are disposed on two different surfaces out of the second wall surface 100b, the third wall surface 100c, the fourth wall surface 100d, the fifth wall surface 100e, and the sixth wall surface 100f. In other words, the first electrical device 60a and the second electrical device 60b are separately disposed on the outer periphery of the drive device 92. For example, the first electrical case 102 is disposed on the fifth wall surface 100e. When mounted in the electrified vehicle 10, the first electrical case 102 is located adjacent to and above the drive case 100 in the vertical direction. In other words, when mounted in the electrified vehicle 10, one of the first electrical device 60a and the second electrical device 60b, for example the first electrical device 60a, is located adjacent to and above the drive device 92 in the vertical direction. The second electrical case 104 is disposed on the second wall surface 100b. When mounted in the electrified vehicle 10, the second electrical case 104 is located adjacent to the drive case 100 on the opposite side from the engine 12. In other words, when mounted in the electrified vehicle 10, the second electrical device 60b is located adjacent to the drive device 92 on the opposite side from the engine 12. When mounted in the electrified vehicle 10, the second electrical device 60b is located adjacent to the drive device 92 in the horizontal direction.

In FIG. 4, the DC-DC converter 62 and reactor 70 of the second electrical device 60b are disposed next to each other in the vertical direction in the DC-DC space Sdc of the cover 18c. However, the present invention is not limited to this form. For example, the DC-DC converter 62 and the reactor 70 may be disposed next to each other in the horizontal direction in the DC-DC space Sdc.

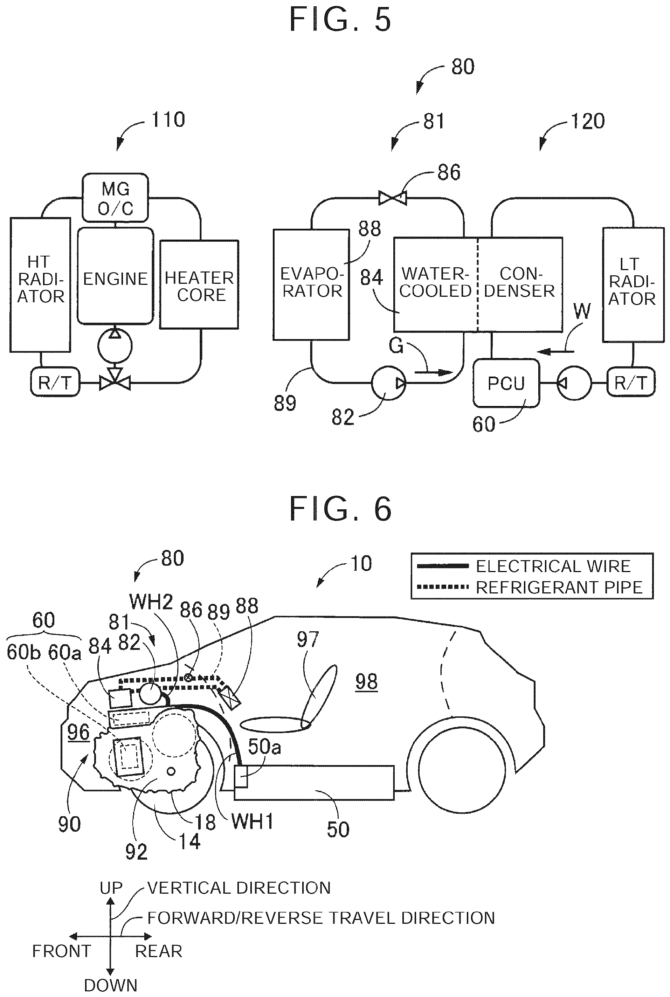

FIG. 5 illustrates an example of a heat control circuit diagram (heat management circuit diagram). In FIG. 5, the electrified vehicle 10 includes a high-temperature cooling circuit 110, a low-temperature cooling circuit 120, and a refrigerant circuit 81. The high-temperature cooling circuit 110 is a cooling system that circulates a coolant for the engine 12. The low-temperature cooling circuit 120 is a water-cooling cooling system that cools the power control unit 60. In the figure, "R/T" is a reserve tank, "MG O/C" is an oil cooler that cools the first electric motor MG1 and the second electric motor MG2, and "PCU" is the power control unit 60. "MG O/C" may be contained in the low-temperature cooling circuit 120.

The refrigerant circuit 81 includes the electric compressor 82, a water-cooled condenser 84, an expansion valve 86, an evaporator 88, and a refrigerant pipe 89, and constitutes part of the air conditioner 80. The air conditioner 80 includes the refrigerant circuit 81, a blower motor, not shown, and a temperature sensor, not shown. The air conditioner 80 is an air conditioner system that controls the cabin temperature of the electrified vehicle 10.

In the refrigerant circuit 81, when the electric compressor 82 is driven, a refrigerant G in the refrigerant pipe 89 is sucked in and compressed, so that the resultant high temperature, high pressure refrigerant G is discharged into the water-cooled condenser 84. The water-cooled condenser 84 cools and liquefies the refrigerant G discharged from the electric compressor 82. The water-cooled condenser 84 is a water-cooled exterior heat exchanger that is cooled by coolant W that cools the power control unit 60. The expansion valve 86 rapidly expands the refrigerant G liquefied by the water-cooled condenser 84, changing the liquid refrigerant G into a low temperature, low pressure mist. The evaporator 88 is an interior heat exchanger that is provided in a duct, not shown, and absorbs heat from air introduced by the blower motor, not shown, to cool the air. The mist refrigerant G in the evaporator 88 absorbs heat and turns into a low temperature, low pressure gaseous refrigerant G, and is returned to the electric compressor 82.

FIG. 6 illustrates an example of the electrified vehicle 10 with the mechatronic unit 90 and the refrigerant circuit 81 mounted therein. FIG. 6 shows the outer appearance of the electrified vehicle 10 as viewed from the left side. In FIG. 6, the mechatronic unit 90 is disposed in a front compartment 96. The front compartment 96 is a power source compartment that houses the power sources. Since the electrified vehicle 10 is equipped with the engine 12 as a power source, the front compartment 96 is synonymous with engine compartment. The front compartment 96 is located adjacent to a driver's seat compartment 98 where a driver's seat 97 is located. The front compartment 96 is located in front of the driver's seat compartment 98 in the forward/reverse travel direction of the electrified vehicle 10. The driver's seat compartment 98 is synonymous with vehicle cabin.

The high voltage battery 50 is disposed on the side closer to the front compartment 96 side under the driver's seat compartment 98 in the vertical direction. The high voltage battery 50 is provided with an electric power input/output port 50a on the front compartment 96 side. This can reduce the path length of a wire connecting the power control unit 60 and the high voltage battery 50 (see first wire WH1 described below).

The electrified vehicle 10 is provided with a first wire WH1 that connects the input/output port 50a of the high voltage battery 50 and the power control unit 60. The electrified vehicle 10 is provided with a second wire WH2 that connects the power control unit 60 and the electric compressor 82. The first wire WH1 and the second wire WH2 are connected in the power control unit 60. That is, a branch portion 54 where the electrical path from the high voltage battery 50 to the power control unit 60, particularly to the first electrical device 60a, is branched is provided in the power control unit 60 (see FIG. 2). The power control unit 60 side of the first wire WH1 and the power control unit 60 side of the second wire WH2 are connected in the branch portion 54. The electric compressor 82 is connected to the high voltage battery 50 in the branch portion 54 (see FIG. 2). The DC-DC converter 62 is connected to the high voltage battery 50 in the branch portion 54 (see FIG. 2).

When mounted in the electrified vehicle 10, the water-cooled condenser 84 is located vertically above the mechatronic unit 90. For example, when mounted in the electrified vehicle 10, the water-cooled condenser 84 is located vertically above the first electrical device 60a.

When mounted in the electrified vehicle 10, the electric compressor 82 is located vertically above the mechatronic unit 90. For example, when mounted in the electrified vehicle 10, the electric compressor 82 is located vertically above the first electrical device 60a.

As described above, according to the first embodiment, the water-cooled condenser 84 is located vertically above the mechatronic unit 90 when mounted in the electrified vehicle 10. This improves flexibility in position of the water-cooled condenser 84 compared to an air-cooled exterior heat exchanger. The water-cooled condenser 84 disposed vertically above the mechatronic unit 90 is less susceptible to damage in a frontal collision compared to an air-cooled exterior heat exchanger that is disposed at the front inside the front compartment 96. Therefore, damage to the air conditioner 80, particularly to the refrigerant circuit 81, can be prevented or reduced in the event of a frontal collision.

According to the first embodiment, the electric compressor 82 is located vertically above the mechatronic unit 90 when mounted in the electrified vehicle 10. This makes the electric compressor 82 less susceptible to damage in a frontal collision than when the electric compressor 82 is disposed at the front inside the front compartment 96. Therefore, damage to the air conditioner 80 can be prevented or reduced in the event of a frontal collision.

According to the first embodiment, the first electrical device 60a and the second electrical device 60b are separately disposed on the outer periphery of the drive device 92. When mounted in the electrified vehicle 10, the first electrical device 60a is located vertically above the drive device 92, and the water-cooled condenser 84 is located vertically above the first electrical device 60a. The water-cooled condenser 84 is thus disposed in the space created vertically above the mechatronic unit 90 as a result of both the reduction in size due to integration and the separate arrangement of the power control unit 60. This makes the water-cooled condenser 84 less susceptible to damage in the event of a frontal collision.

According to the first embodiment, the electric compressor 82 is connected to the high voltage battery 50 in the branch portion 54, and is located vertically above the first electrical device 60a when mounted in the electrified vehicle 10. The electric compressor 82 is thus disposed in the space created vertically above the mechatronic unit 90 as a result of both the reduction in size due to integration and the separate arrangement of the power control unit 60. This makes the electric compressor 82 less susceptible to damage in the event of a frontal collision. Moreover, the length of the second wire WH2 connecting the electric compressor 82 and the branch portion 54 is reduced, so that cost can be reduced.

According to the first embodiment, the water-cooled condenser 84 is cooled by the coolant W that cools the power control unit 60. The water-cooled condenser 84 is thus appropriately cooled without the need for a dedicated water-cooling device for cooling the water-cooled condenser 84.

For example, in the case of an air-cooled exterior heat exchanger, a radiator is disposed at the rear. However, the use of the water-cooled condenser 84 disposed vertically above the mechatronic unit 90 improves the cooling performance of the radiator.

Hereinafter, other embodiments of the present invention will be described. In the following description, the same portions are denoted by the same signs throughout the embodiments, and description thereof will be omitted.

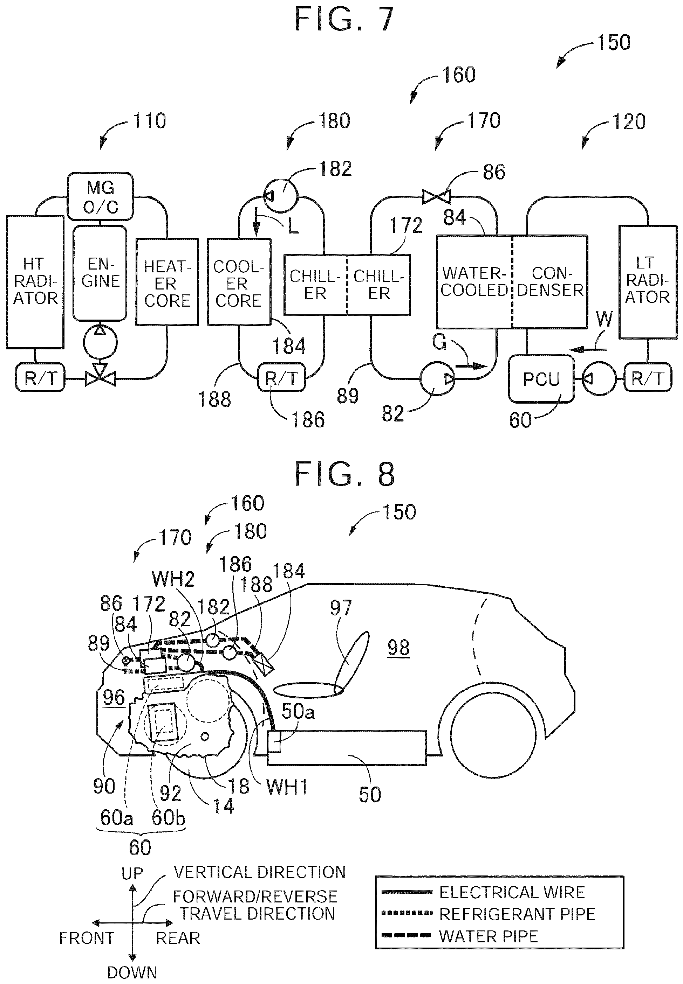

An electrified vehicle according to a second embodiment of the present invention will be described. In the electrified vehicle, as shown in FIG. 7 described later, an air conditioner 160 includes a refrigerant circuit 170 that uses, for example, a flammable gas as the refrigerant G circulated through the electric compressor 82 and the water-cooled condenser 84. In this case, damage to the air conditioner 160 in the event of a frontal collision becomes an issue. For example, leakage of the flammable gas may occur. In particular, the flammable gas may leak into the driver's seat compartment 98. In order to prevent leakage of the refrigerant G into the driver's seat compartment 98, a secondary loop is formed to circulate a nonflammable refrigerant L in the driver's seat compartment 98.

FIG. 7 shows an example of an electrified vehicle 150 of the second embodiment. FIG. 7 illustrates an example of a thermal control circuit diagram. This example is different from the thermal control circuit diagram of FIG. 5 that shows an example of the electrified vehicle 10 of the first embodiment. In FIG. 7, the electrified vehicle 150 includes the high-temperature cooling circuit 110, the low-temperature cooling circuit 120, a first refrigerant circuit 170, and a second refrigerant circuit 180. The refrigerant circuit 170 and the second refrigerant circuit 180 constitute part of the air conditioner 160.

The refrigerant circuit 170 is different from the refrigerant circuit 81 of FIG. 5 mainly in that the evaporator 88 is replaced with a chiller 172. The chiller 172 is a refrigerant heat exchanger that exchanges heat between the refrigerant G (flammable gas) and the nonflammable refrigerant L. The second refrigerant circuit 180 includes an electric pump 182, a cooler core 184, a reserve tank 186, and a water pipe 188, and uses the nonflammable refrigerant L as a refrigerant. The nonflammable refrigerant L is, for example, a coolant. In the second refrigerant circuit 180, when the electric pump 182 is driven, the nonflammable refrigerant L is discharged into the cooler core 184. The cooler core 184 is an interior heat exchanger that is provided in a duct, not shown, and absorbs heat from air introduced by a blower motor, not shown, to cool the air.

FIG. 8 illustrates an example of the electrified vehicle 150 of the second embodiment with the mechatronic unit 90 and the refrigerant circuit 170 mounted therein. This example is different from the electrified vehicle 10 of the first embodiment shown in FIG. 1. FIG. 8 shows the outer appearance of the electrified vehicle 150 as viewed from the left side. In FIG. 8, when mounted in the electrified vehicle 150, the chiller 172 is located vertically above the mechatronic unit 90. For example, when mounted in the electrified vehicle 150, the chiller 172 is located vertically above the first electrical device 60a. For example, the chiller 172 and the water-cooled condenser 84 are disposed next to each other in the horizontal direction.

As described above, the second embodiment has the same effects as those of the first embodiment.

According to the second embodiment, the air conditioner 160 includes the refrigerant circuit 170 that uses a flammable gas as the refrigerant G circulated through the electric compressor 82 and the water-cooled condenser 84. Regarding the aforementioned issue of damage to the air conditioner 160 in the event of a frontal collision, the water-cooled condenser 84 is disposed vertically above the mechatronic unit 90. This makes the air conditioner 160 less susceptible to damage in the event of a frontal collision. Therefore, leakage of the flammable gas can be prevented or reduced.

According to the second embodiment, the air conditioner 160 further includes the second refrigerant circuit 180 and the chiller 172. When mounted in the electrified vehicle 150, the chiller 172 is located vertically above the mechatronic unit 90. This makes the air conditioner 160 less susceptible to damage in a frontal collision. Therefore, leakage of the flammable gas can be prevented or reduced. Moreover, even if the air conditioner 160 is damaged, leakage of the flammable gas into the driver's seat compartment 98 can be avoided.

Next, an electrified vehicle according to a third embodiment of the present invention will be described. In the first and second embodiments, the power control unit 60 is divided into the first electrical device 60a and the second electrical device 60b, and the first electrical device 60a and the second electrical device 60b are separately disposed on the outer periphery of the drive device 92. In an electrified vehicle 190 of the third embodiment, the power control unit 60 is disposed on the outer periphery of the drive device 92 without being divided.

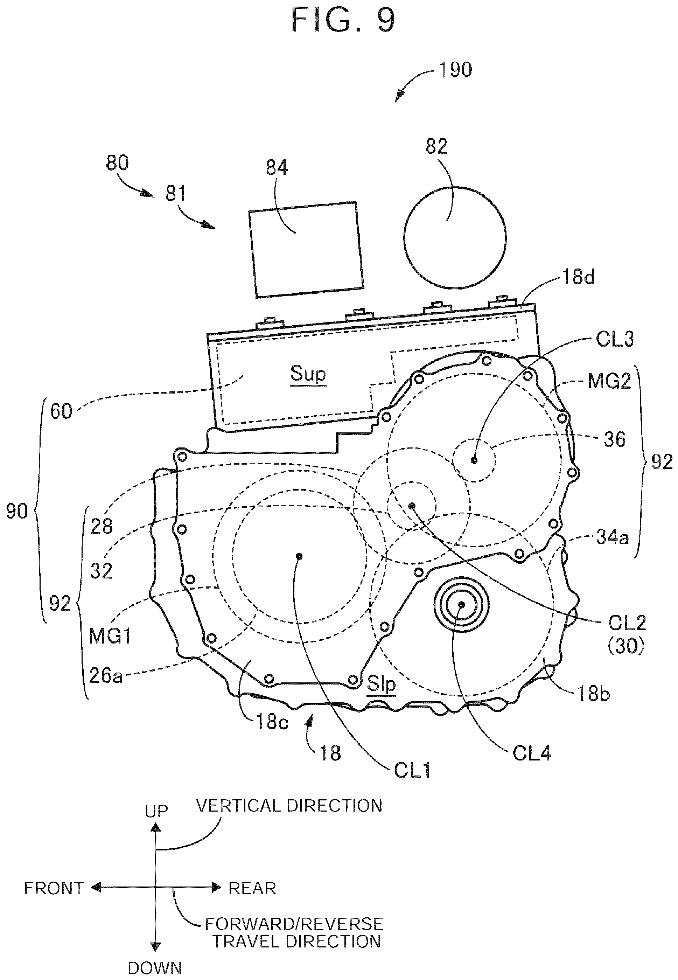

FIG. 9 shows an example of an electrified vehicle 190 of the third embodiment. FIG. 9 illustrates an example of a schematic configuration of the mechatronic unit 90. This example is different from FIG. 3 that shows an example of the electrified vehicle 10 of the first embodiment. In FIG. 9, the electrified vehicle 190 does not include the DC-DC plate 94 included in the electrified vehicle 10 of the first embodiment, because the power control unit 60 is not divided. When mounted in the electrified vehicle 190, the power control unit 60 is housed in the upper space Sup in the case body 18b.

Referring to FIG. 9, the power control unit 60 is mounted in the space created as a result of reduction in vertical size of the drive device 92. When mounted in the electrified vehicle 190, the power control unit 60 is located adjacent to and above the drive device 92 in the vertical direction. When mounted in the electrified vehicle 190, the water-cooled condenser 84 is located vertically above the power control unit 60. When mounted in the electrified vehicle 190, the electric compressor 82 is located vertically above the power control unit 60.

In the electrified vehicle 190, the air conditioner 160 may be used instead of the air conditioner 80. In this case, the chiller 172 is located vertically above the power control unit 60 when mounted in the electrified vehicle 190. For example, the chiller 172 and the water-cooled condenser 84 are disposed next to each other in the horizontal direction.

As described above, according to the third embodiment, damage to the air conditioner 80 or the air conditioner 160 can be prevented or suppressed in the event of a frontal collision, as in the first and second embodiments.

According to the third embodiment, when mounted in the electrified vehicle 190, the power control unit 60 is located vertically above the drive device 92, and the water-cooled condenser 84 is located vertically above the power control unit 60. The water-cooled condenser 84 is thus disposed in the space created vertically above the mechatronic unit 90 as a result of the reduction in size due to integration. This makes the water-cooled condenser 84 less susceptible to damage in the event of a frontal collision.

According to the third embodiment, the electric compressor 82 is connected to the high voltage battery 50 in the branch portion 54 provided in the power control unit 60, and is located vertically above the power control unit 60 when mounted in the electrified vehicle 190. The electric compressor 82 is thus disposed in the space created vertically above the mechatronic unit 90 as a result of the reduction in size due to integration. This makes the electric compressor 82 less susceptible to damage in the event of a frontal collision. Moreover, the length of the second wire WH2 connecting the electric compressor 82 and the branch portion 54 is reduced, so that cost can be reduced.

According to the third embodiment, when the air conditioner 160 is used, leakage of the flammable gas can be prevented or reduced. Moreover, even if the air conditioner 160 is damaged, leakage of the flammable gas into the driver's seat compartment 98 can be avoided.

Next, an electrified vehicle according to a fourth embodiment of the present invention will be described. In the first, second, and third embodiments, the electrified vehicle 10 that is a hybrid electric vehicle including the engine 12, the first electric motor MG1, and the second electric motor MG2 is illustrated as an electrified vehicle. In the fourth embodiment, the electrified vehicle is a battery electric vehicle including an electric motor.

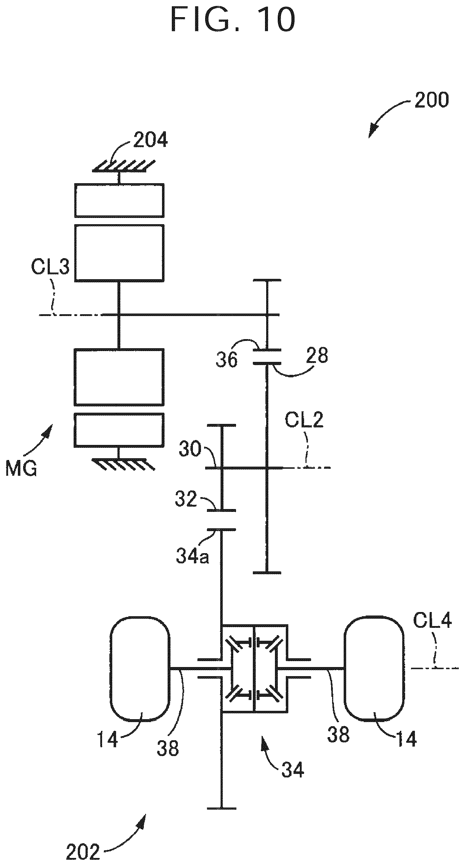

FIG. 10 illustrates an example of a schematic configuration of an electrified vehicle 200 according to the fourth embodiment of the present invention. In FIG. 10, the electrified vehicle 200 is a battery electric vehicle including an electric motor MG. The electrified vehicle 200 is different from the electrified vehicle 10 of the first embodiment mainly in that the electrified vehicle 200 does not include the engine 12 and the transmission unit 24 including the first electric motor MG1. The electric motor MG of the electrified vehicle 200 corresponds to the second electric motor MG2 of the electrified vehicle 10. Like the electrified vehicle 10, the electrified vehicle 200 includes a power transmission device 202 to which the electric motor MG is connected in such a manner that power is transmittable. The electric motor MG functions as a power source. The electric motor MG and the power transmission device 202 are provided inside a case 204.

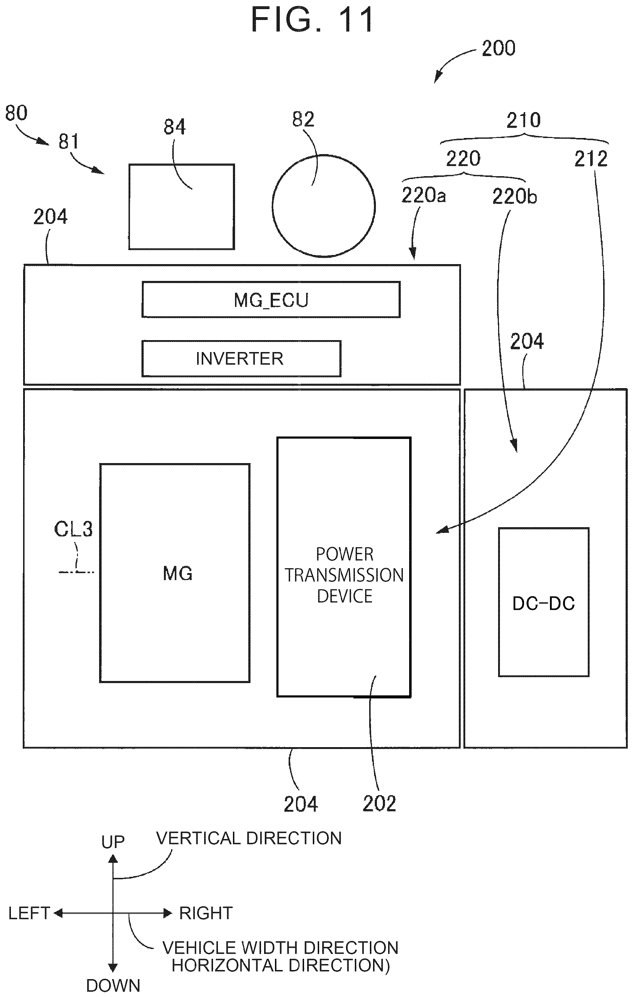

FIG. 11 illustrates an example of the arrangement of a mechatronic unit 210 and the refrigerant circuit 81. FIG. 11 is a view as viewed from the rear of the electrified vehicle 200. In FIG. 11, the electrified vehicle 200 includes a power control unit 220. The power control unit 220 is a power control device that controls electric power transferred between a high voltage battery, not shown, and the electric motor MG. The mechatronic unit 210 is an integrated unit combining a drive device 212 and the power control unit 220. The drive device 212 is a transaxle including the power transmission device 202 (28, 32, 34a, 36, etc.) and the electric motor MG. The power control unit 220 is divided into a first electrical device 220a and a second electrical device 220b, and the first electrical device 220a and the second electrical device 220b are separately disposed.

The first electrical device 220a and the second electrical device 220b are separately disposed on the outer periphery of the drive device 212. For example, when mounted in the electrified vehicle 200, the first electrical device 220a is located adjacent to and above the drive device 212 in the vertical direction. When mounted in the electrified vehicle 200, the second electrical device 220b is located adjacent to the drive device 212 in the horizontal direction.

When mounted in the electrified vehicle 200, the water-cooled condenser 84 is located vertically above the first electrical device 220a. When mounted in the electrified vehicle 200, the electric compressor 82 is located vertically above the first electrical device 220a.

In the electrified vehicle 200, the power control unit 220 may be disposed on the outer periphery of the drive device 212 without being divided. For example, when mounted in the electrified vehicle 200, the power control unit 220 may be located adjacent to and above the drive device 212 in the vertical direction.

In the electrified vehicle 200, the air conditioner 160 may be used instead of the air conditioner 80. In this case, the chiller 172 is located vertically above the first electrical device 220a or the power control unit 220 when mounted in the electrified vehicle 200. For example, the chiller 172 and the water-cooled condenser 84 are disposed next to each other in the horizontal direction. Since the electrified vehicle 200 does not include the engine 12, the electrified vehicle 200 does not include the high-temperature cooling circuit 110 in the thermal control circuit diagram.

As described above, the fourth embodiment has the same effects as those of the first and second embodiments.

Next, an electrified vehicle according to a fifth embodiment of the present invention will be described. In the first embodiment, the electrified vehicle 10 that is a hybrid electric vehicle including the engine 12, the first electric motor MG1, and the second electric motor MG2 is illustrated as an electrified vehicle. In the fifth embodiment, the electrified vehicle is a parallel hybrid electric vehicle including an engine, a power transmission device that transmits power from the engine to drive wheels, and an electric motor that transmits power to the drive wheels via the power transmission device.

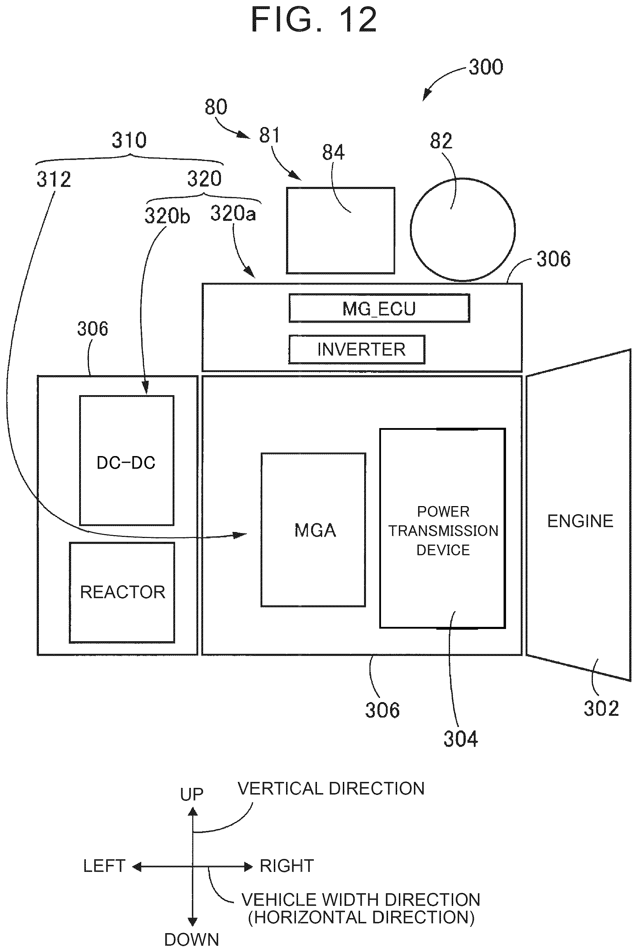

FIG. 12 illustrates an example of an electrified vehicle 300 according to the fifth embodiment of the present invention. FIG. 12 illustrates an example of the arrangement of a mechatronic unit 310 and the refrigerant circuit 81. FIG. 12 is a view as viewed from the rear of the electrified vehicle 300.

In FIG. 12, the electrified vehicle 300 is a hybrid electric vehicle including an engine 302, an assist motor MGA, and a power transmission device 304. The power transmission device 304 is connected to the assist motor MGA in such a manner that power is transmittable. The engine 302 and the assist motor MGA each function as a power source. The assist motor MGA is an electric motor connected to the power transmission device 304 in such a manner that power is transmittable. The assist motor MGA and the power transmission device 304 are provided inside a case 306.

Like the electrified vehicle 10, the electrified vehicle 300 has an electrical configuration related to control of the assist motor MGA etc. The electrified vehicle 300 includes a power control unit 320. The power control unit 320 is a power control device that controls electric power transferred between a high voltage battery, not shown, and the assist motor AMG. The mechatronic unit 310 is an integrated unit combining a drive device 312 and the power control unit 320. The drive device 312 is a transaxle including the power transmission device 304 and the assist motor MGA. The power control unit 320 is divided into a first electrical device 320a and a second electrical device 320b, and the first electrical device 320a and the second electrical device 320b are separately disposed.

When mounted in the electrified vehicle 300, the engine 302 is located adjacent to the drive device 312 in the horizontal direction.

The first electrical device 320a and the second electrical device 320b are separately disposed on the outer periphery of the drive device 312. For example, when mounted in the electrified vehicle 300, the first electrical device 320a is located adjacent to and above the drive device 312 in the vertical direction. When mounted in the electrified vehicle 300, the second electrical device 320b is located adjacent to the drive device 312 on the opposite side from the engine 302. When mounted in the electrified vehicle 300, the second electrical device 320b is located adjacent to the drive device 312 in the horizontal direction.

When mounted in the electrified vehicle 300, the water-cooled condenser 84 is located vertically above the first electrical device 320a. When mounted in the electrified vehicle 300, the electric compressor 82 is located vertically above the first electrical device 320a.

In the electrified vehicle 300, the power control unit 320 may be disposed on the outer periphery of the drive device 312 without being divided. For example, when mounted in the electrified vehicle 300, the power control unit 320 may be located adjacent to and above the drive device 312 in the vertical direction.

In the electrified vehicle 300, the air conditioner 160 may be used instead of the air conditioner 80. In this case, the chiller 172 is located vertically above the first electrical device 320a or the power control unit 320 when mounted in the electrified vehicle 300. For example, the chiller 172 and the water-cooled condenser 84 are disposed next to each other in the horizontal direction.

As described above, the fourth embodiment has the same effects as those of the first, second, and third embodiments.

Although the embodiments of the present invention are described above in detail with reference to the drawings, the present invention is also applicable to other modes.

For example, in the first embodiment, the first electrical device 60a is disposed vertically above the drive device 92, and the second electrical device 60b is disposed in the horizontal direction relative to the drive device 92. However, the present invention is not limited to this form. The first electrical device 60a and the second electrical device 60b may be disposed in any manner as long as they are separately disposed on the outer periphery of the drive device 92. Therefore, the second electrical device 60b may be disposed vertically above the drive device 92, and the first electrical device 60a may be disposed in the horizontal direction relative to the drive device 92. The same applies to the second, fourth, and fifth embodiments.

In the first embodiment, the electrified vehicle 10 may be a so-called plug-in hybrid electric vehicle whose high voltage battery 50 can be charged with electric power supplied from an external power supply. In this case, for example, a charger included in the electrified vehicle 10 may be disposed next to the water-cooled condenser 84 etc. in the horizontal direction. The same applies to the second, third, and fifth embodiments.

In the first embodiment, the DC-DC plate 94 to which the second electrical device 60b is fixed is attached to the cover 18c. However, the present invention is not limited to this form. For example, the second electrical device 60b may be fixed to the case body 18b side of the cover 18c. In this case, the cover 18c is connected to the case body 18b, so that the DC-DC space Sdc is formed in the cover 18c.

The electrified vehicle to which the present invention is applied may be a series hybrid electric vehicle including an engine, a driving motor that functions as a power source, and a power supply motor that is connected to the engine in such a manner that power is transmittable, and that generates electric power using the power of the engine. In such a series hybrid electric vehicle, the engine functions as a power source because the driving motor generates power using the electric power generated using the power of the engine. Such a series hybrid electric vehicle may be configured such that the power transmission path between the engine and the drive wheels is disconnected or connected by the operation of a clutch.

In the first embodiment, the first wall surface 100a, the second wall surface 100b, the third wall surface 100c, the fourth wall surface 100d, the fifth wall surface 100e, and the sixth wall surface 100f of the drive case 100 do not have to be flat surfaces. The first wall surface 100a, the second wall surface 100b, the third wall surface 100c, the fourth wall surface 100d, the fifth wall surface 100e, and the sixth wall surface 100f may be any wall surfaces as long as they form a space for housing the drive device 92, and may have a structure that includes, for example, a recessed or protruding portion.

## Claims

1. A hybrid electric vehicle, (10) comprising:
a drive device including an electric motor (MG1, MG2) and a power transmission device (16) to which the electric motor is connected in such a manner that power is transmittable;
a driving battery (50) for the hybrid electric vehicle;
a mechatronic unit (90) that is an integrated unit combining the drive device and a power control unit (60) configured to control electric power transferred between the battery (50) and the electric motor; and
an air conditioner (80) including an electric compressor (82) and an exterior heat exchanger (84),
**characterized in that**
the exterior heat exchanger (84) is of a water-cooled type, and is located vertically above the mechatronic unit (90) when mounted in the hybrid electric vehicle.

2. The hybrid electric vehicle according to claim 1, **characterized in that** the air conditioner (80) includes a refrigerant circuit (81) through which a refrigerant is circulated.

3. The hybrid electric vehicle according to claim 1 or 2, **characterized in that** the electric compressor (82) is located vertically above the mechatronic unit (90) when mounted in the hybrid electric vehicle.

4. The hybrid electric vehicle according to claim 1 or 2, **characterized in that**:
the power control unit (60) is located vertically above the drive device when mounted in the hybrid electric vehicle; and
the exterior heat exchanger (84) is located vertically above the power control unit (90) when mounted in the hybrid electric vehicle.

5. The hybrid electric vehicle according to claim 4, **characterized in that**:
the electric compressor (82) is connected to the battery in a branch portion where an electrical path from the battery (50) to the power control unit (60) is branched, the branch portion being provided in the power control unit (60); and
the electric compressor (82) is located vertically above the power control unit (60) when mounted in the hybrid electric vehicle.

6. The hybrid electric vehicle according to claim 1 or 2, **characterized in that**:
a part of the power control unit (60) is a first electrical device (60a);
another part of the power control unit (60) is a second electrical device (60b);
the first electrical device and the second electrical device are separately disposed on an outer periphery of the drive device (92);
one electrical device out of the first electrical device and the second electrical device is located vertically above the drive device (92) when mounted in the hybrid electric vehicle; and
the exterior heat exchanger (84) is located vertically above the one electrical device when mounted in the hybrid electric vehicle.

7. The hybrid electric vehicle according to claim 6, **characterized in that**:
the electric compressor (82) is connected to the battery (50) in a branch portion where an electrical path from the battery (50) to the one electrical device is branched, the branch portion being provided in the one electrical device; and
the electric compressor (82) is located vertically above the one electrical device when mounted in the hybrid electric vehicle.

8. The hybrid electric vehicle according to claim 1 or 2, **characterized in that** the exterior heat exchanger (84) is cooled by a coolant that cools the power control unit. (60).

9. The hybrid electric vehicle according to any one of claims 1 to 8, **characterized in that** the air conditioner (80) includes a refrigerant circuit (170) that uses a flammable gas as a refrigerant circulated through the electric compressor (82) and the exterior heat exchanger. (84)

10. The hybrid electric vehicle according to claim 9, **characterized in that**:
the air conditioner (80) includes an electric pump (182) and an interior heat exchanger; (184)
the air conditioner (160) further includes a second refrigerant circuit (180) using a nonflammable refrigerant as a refrigerant, and a refrigerant heat exchanger (172) that exchanges heat between the flammable gas and the nonflammable refrigerant; and
the refrigerant heat exchanger is located vertically above the mechatronic unit when mounted in the hybrid electric vehicle.

## Patentansprüche

1. Hybrid-Elektrofahrzeug (10), das Folgendes aufweist:
eine Antriebsvorrichtung mit einem Elektromotor (MG1, MG2) und einer Kraftübertragungsvorrichtung (16), mit der der Elektromotor so verbunden ist, dass Kraft übertragbar ist;
eine Antriebsbatterie (50) für das Hybrid-Elektrofahrzeug;
eine mechatronische Einheit (90), die eine integrierte Einheit ist, um die Antriebsvorrichtung und eine Leistungssteuereinheit (60) zu kombinieren, wobei letztere konfiguriert ist, um die zwischen der Batterie (50) und dem Elektromotor übertragene elektrische Leistung zu steuern; und
eine Klimaanlage (80), die einen elektrischen Kompressor (82) und einen Außenwärmetauscher (84) umfasst,
**dadurch gekennzeichnet, dass**
der Außenwärmetauscher (84) wassergekühlt ist und sich eingebaut in das Hybrid-Elektrofahrzeug vertikal über der mechatronischen Einheit (90) befindet.

2. Hybrid-Elektrofahrzeug nach Anspruch 1, **dadurch gekennzeichnet, dass** die Klimaanlage (80) einen Kältemittelkreislauf (81) umfasst, durch den ein Kältemittel zirkuliert.

3. Hybrid-Elektrofahrzeug nach Anspruch 1 oder 2, **dadurch gekennzeichnet, dass** sich der elektrische Kompressor (82) eingebaut in das Hybrid-Elektrofahrzeug vertikal über der mechatronischen Einheit (90) befindet.

4. Hybrid-Elektrofahrzeug nach Anspruch 1 oder 2, **dadurch gekennzeichnet, dass**
sich die Leistungssteuereinheit (60) eingebaut in das Hybrid-Elektrofahrzeug vertikal über der Antriebsvorrichtung befindet; und
sich der Außenwärmetauscher (84) eingebaut in das Hybrid-Elektrofahrzeug vertikal über der Leistungssteuereinheit (90) befindet.

5. Hybrid-Elektrofahrzeug nach Anspruch 4, **dadurch gekennzeichnet, dass**
der elektrische Kompressor (82) mit der Batterie in einem Abzweigbereich verbunden ist, in dem ein elektrischer Pfad von der Batterie (50) zur Leistungssteuereinheit (60) abzweigt, wobei der Abzweigbereich in der Leistungssteuereinheit (60) vorgesehen ist; und
sich der elektrische Kompressor (82) eingebaut in das Hybrid-Elektrofahrzeug vertikal über der Leistungssteuereinheit (60) befindet.

6. Hybrid-Elektrofahrzeug nach Anspruch 1 oder 2, **dadurch gekennzeichnet, dass**
ein Teil der Leistungssteuereinheit (60) eine erste elektrische Vorrichtung (60a) ist;
ein anderer Teil der Leistungssteuereinheit (60) eine zweite elektrische Vorrichtung (60b) ist;
sich die erste elektrische Vorrichtung und die zweite elektrische Vorrichtung separat an einem Außenumfang der Antriebsvorrichtung (92) befinden;
sich eine elektrische Vorrichtung aus der ersten elektrischen Vorrichtung und der zweiten elektrischen Vorrichtung eingebaut in das Hybrid-Elektrofahrzeug vertikal über der Antriebsvorrichtung (92) befindet; und
sich der Außenwärmetauscher (84) eingebaut in das Hybrid-Elektrofahrzeug vertikal über der einen elektrischen Vorrichtung befindet.

7. Hybrid-Elektrofahrzeug nach Anspruch 6, **dadurch gekennzeichnet, dass**
der elektrische Kompressor (82) mit der Batterie (50) in einem Abzweigabschnitt verbunden ist, in dem ein elektrischer Pfad von der Batterie (50) zu dem einen elektrischen Gerät abzweigt, wobei der Abzweigabschnitt in dem einen elektrischen Gerät vorgesehen ist; und
sich der elektrische Kompressor (82) eingebaut in das Hybrid-Elektrofahrzeug vertikal über dem einen elektrischen Gerät befindet.

8. Hybrid-Elektrofahrzeug nach Anspruch 1 oder 2, **dadurch gekennzeichnet, dass** der Außenwärmetauscher (84) durch ein Kühlmittel gekühlt ist, das die Leistungssteuereinheit (60) kühlt.

9. Hybrid-Elektrofahrzeug nach einem der Ansprüche 1 bis 8, **dadurch gekennzeichnet, dass** die Klimaanlage (80) einen Kältemittelkreislauf (170) umfasst, der ein brennbares Gas als Kältemittel verwendet, das durch den elektrischen Kompressor (82) und den Außenwärmetauscher (84) zirkuliert.

10. Hybrid-Elektrofahrzeug nach Anspruch 9, **dadurch gekennzeichnet, dass**
die Klimaanlage (80) eine elektrische Pumpe (182) und einen Innenwärmetauscher (184) umfasst;
die Klimaanlage (160) ferner einen zweiten Kältemittelkreislauf (180) umfasst, der ein nicht brennbares Kältemittel als Kältemittel verwendet, sowie einen Kältemittelwärmetauscher (172), der Wärme zwischen dem brennbaren Gas und dem nicht brennbaren Kältemittel austauscht; und
sich der Kältemittelwärmetauscher eingebaut in das Hybrid-Elektrofahrzeug vertikal über der mechatronischen Einheit befindet.

## Revendications

1. Véhicule électrique hybride (10), comprenant :
un dispositif d'entraînement comprenant un moteur électrique (MG1, MG2) et un dispositif de transmission de puissance (16) auquel le moteur électrique est connecté de manière que la puissance peut être transmise ;
une batterie d'entraînement (50) pour le véhicule électrique hybride ;
une unité mécatronique (90) qui est une unité intégrée combinant le dispositif d'entraînement et une unité de commande de puissance (60) configurée pour commander la puissance électrique transférée entre la batterie (50) et le moteur électrique ; et
un climatiseur (80) comportant un compresseur électrique (82) et un échangeur de chaleur extérieur (84),
**caractérisé en ce que**
l'échangeur de chaleur extérieur (84) est du type refroidi à l'eau et est situé verticalement au-dessus de l'unité mécatronique (90) lorsqu'il est monté dans le véhicule électrique hybride.

2. Véhicule électrique hybride selon la revendication 1, **caractérisé en ce que** le climatiseur (80) comporte un circuit de réfrigérant (81) à travers lequel un réfrigérant circule.

3. Véhicule électrique hybride selon la revendication 1 ou 2, **caractérisé en ce que** le compresseur électrique (82) est situé verticalement au-dessus de l'unité mécatronique (90) lorsqu'il est monté dans le véhicule électrique hybride.

4. Véhicule électrique hybride selon la revendication 1 ou 2, **caractérisé en ce que** :
l'unité de commande de puissance (60) est située verticalement au-dessus du dispositif d'entraînement lorsqu'elle est montée dans le véhicule électrique hybride ; et
l'échangeur de chaleur extérieur (84) est situé verticalement au-dessus de l'unité de commande de puissance (90) lorsqu'il est monté dans le véhicule électrique hybride.

5. Véhicule électrique hybride selon la revendication 4, **caractérisé en ce que** :
le compresseur électrique (82) est connecté à la batterie dans une partie de dérivation où un chemin électrique allant de la batterie (50) à l'unité de commande de puissance (60) est dérivé, la partie de dérivation étant prévue dans l'unité de commande de puissance (60) ; et
le compresseur électrique (82) est situé verticalement au-dessus de l'unité de commande de puissance (60) lorsqu'il est monté dans le véhicule électrique hybride.

6. Véhicule électrique hybride selon la revendication 1 ou 2, **caractérisé en ce que** :
une partie de l'unité de commande de puissance (60) est un premier dispositif électrique (60a) ;
une autre partie de l'unité de commande de puissance (60) est un deuxième dispositif électrique (60b) ;
le premier dispositif électrique et le deuxième dispositif électrique sont disposés séparément sur une périphérie extérieure du dispositif d'entraînement (92) ;
l'un des premier et deuxième dispositifs électriques est situé verticalement au-dessus du dispositif d'entraînement (92) lorsqu'il est monté dans le véhicule électrique hybride ; et
l'échangeur de chaleur extérieur (84) est situé verticalement au-dessus dudit dispositif électrique lorsqu'il est monté dans le véhicule électrique hybride.

7. Véhicule électrique hybride selon la revendication 6, **caractérisé en ce que** :
le compresseur électrique (82) est connecté à la batterie (50) dans une partie de dérivation où un chemin électrique allant de la batterie (50) à l'un dispositif électrique est dérivé, la partie de dérivation étant prévue dans le dispositif électrique ; et
le compresseur électrique (2) est situé verticalement au-dessus de l'un dispositif électrique lorsqu'il est monté dans le véhicule électrique hybride.

8. Véhicule électrique hybride selon la revendication 1 ou 2, **caractérisé en ce que** l'échangeur de chaleur extérieur (84) est refroidi par un liquide de refroidissement qui refroidit l'unité de commande de puissance (60).

9. Véhicule électrique hybride selon l'une quelconque des revendications 1 à 8, **caractérisé en ce que** le climatiseur (80) comporte un circuit de réfrigérant (170) qui utilise un gaz inflammable comme réfrigérant circulant à travers le compresseur électrique (82) et l'échangeur de chaleur extérieur (84).

10. Véhicule électrique hybride selon la revendication 9, **caractérisé en ce que** :
le climatiseur (80) comporte une pompe électrique (182) et un échangeur de chaleur intérieur (184) ;
le climatiseur (160) comporte en outre un deuxième circuit de réfrigérant (180) utilisant un réfrigérant ininflammable comme réfrigérant, et un échangeur de chaleur de réfrigérant (172) qui échange la chaleur entre le gaz inflammable et le réfrigérant ininflammable ; et
l'échangeur de chaleur de réfrigérant est situé verticalement au-dessus de l'unité mécatronique lorsqu'il est monté dans le véhicule électrique hybride.
